# NEUE EUROPÄISCHE PATENTSCHRIFT

(11) **EP 0 459 435 B2**
(45) Veröffentlichungstag und Bekanntmachung des Hinweises auf die Entscheidung über den Einspruch: **15.09.1999**
(45) Hinweis auf die Patenterteilung: 11.10.1995
(21) Anmeldenummer: 91108768.2
(22) Anmeldetag: 29.05.1991
(51) Int. Cl.: G01D 5/244, H02P 6/00

(54) **Messverfahren für die Drehlage eines Gleichstrommotors**
Measuring method for angular position of direct current motor
Procédé pour mesurer la position angulaire d'un moteur à courant continu

(30) Priorität: 01.06.1990 DE 4017779
(43) Veröffentlichungstag der Anmeldung: 04.12.1991
(73) Patentinhaber: Bayerische Motoren Werke Aktiengesellschaft, 80788 München (DE)
(72) Erfinder: Griessbach, Robert, W-8011 Höhenkirchen (DE)

(56) Entgegenhaltungen:
- EP-A- 0 251 785
- EP-A- 0 288 119
- DE-A- 2 606 213
- DE-A- 3 307 623
- DE-A- 3 543 058
- DE-A- 3 824 811
- DE-A- 3 901 893
- DE-A- 3 902 166
- DE-C- 3 232 918
- DE-C- 3 527 906

## Beschreibung

Die Erfindung bezieht sich auf ein Verfahren nach dem Oberbegriff des Patentanspruchs 1.

Ein derartiges Verfahren ist aus der EP 0 288 119 A bekannt. Damit wird es möglich, Signaländerungen innerhalb eines Signals und insbesondere relative Extremwerte des Signals zu bestimmen. Da das Meßsignal von einem Störsignal überlagert ist, soll der Einfluß des Störsignals durch einen entsprechend der Stärke des Störsignals variierenden Filter ausgeblendet werden. Die Eigenschaften des Meßsignals und insbesondere der Extremwerte werden erkannt, indem zum jeweiligen Meßsignal ein Referenzsignal gewonnen wird, das in seinem Verlauf dem Meßsignals nachläuft, sobald der Unterschied zwischen dem Meßsignal und dem Referenzsignal einen vorgegebenen Differenzwert erreicht. Der Differenzwert ist von der Stärke des Störsignals abhängig und schwankt zwischen 0 und einem Maximalwert.

Die Anpassung des Differenzwerts und damit des Filters an Störsignale ist besonders aufwendig. Dieses Meßverfahren ist besonders aufwendig und führt häufig trotzdem nicht zu den gewünschten richtigen Ergebnissen. Die Ursache ist in der Art und Qualität des eigentlichen Meßsignals und der diesen überlagerten Störsignale zu sehen. Überdeckt das Meßsignal einen relativ großen Frequenzbereich von 1 bis beispielsweise 1000 Hz, ist es in der Regel nicht möglich, sämtliche Störsignale auf diese Weise zu beseitigen.

Hinzu kommt, daß sich durch das bekannte Verfahren nur höherfrequente Störsignale beseitigen lassen. Niederfrequentere Störungen, wie sie beispielsweise bei einem Gleichstrommotor durch konstruktive ,,Fehler", z. B. den unterschiedlichen Wicklungsabstand der Rotormagnetspulen hervorgerufen werden, lassen sich dadurch nicht beseitigen. Für den angesprochenen Anwendungsfall ergeben sich durch die Schalt- und Steuervorgänge, die zum Betrieb des Gleichstrommotors erforderlich sind, sowie durch externe Störquellen höherfrequente Störungen mit einem Frequenzbereich, der ein Vielfaches des Frequenzbereichs des Meßsignals selbst ist. Höherfrequente Störungen werden verursacht durch die für den jeweiligen Anwendungsfall in der Nachbarschaft des Gleichstrommotors angeordneten elektrischen Elemente, beispielsweise beim Anwendungsfall eines Kraftfahrzeugs die elektromagnetischen Wellen, die von Zündverteilung und Generator ausgehen.

Der Erfindung liegt die Aufgabe zugrunde, ein Verfahren der eingangs genannten Art zu schaffen, das auf schaltungstechnisch einfache Weise die Erkennung von Extremwerten auch bei Meßsignalen von 1 bis ca. 1000 Hz mit überlagerten Störsignalen ermöglicht, die nieder- und höherfrequenter als das Meßsignal sind. Die höherfrequenteren Störsignale sollen in einem Frequenzbereich liegen können, der ein Vielfaches der Meßsignal-Mmaximalfrequenz beträgt.

Die Erfindung löst diese Aufgabe durch die Merkmale des Patentanspruchs 1.

Ein derartiges Verfahren eignet sich besonders zur Erkennung der Drehlage eines Gleichstrommotors. Da lediglich die Änderungstendenz des Meßsignals dazu verwendet wird, einen Zählimpuls auszugeben, wird der Einfluß nieder- und hochfrequenter Störsignale auf einfache Weise ausgeblendet. Hierzu gehören z. B. einfache Tiefpaßfilter, die im Gegensatz zu bekannten Meßverfahren, wie sie aus der DD 254254 A1 bekannt sind, nicht spannungsgesteuert zu sein brauchen. Es ist dann auch nicht mehr erforderlich, die Intensität und die Frequenz des Störsignals zu berücksichtigen.

Niederfrequentere Störungen können ebenfalls mit geringem Aufwand ausgeblendet werden, da ihre Intensität d. R. wesentlich geringer als die des Meßsignals ist und auch zeitlich erheblichen Schwankungen unterworfen ist. Nur das Meßsignal besitzt einen Verlauf, für den eindeutig eine Änderungstendenz feststellbar ist und entspricht in seinem grundsätzlichen Verlauf dem einer Sinusschwingung. Da somit ein relatives Maximum und ein relatives Minimum des Meßsignals feststellbar ist, kann daraus auch der gewünschte Zählimpuls für die Drehlage des Gleichstrommotors gewonnen werden.

Es ist möglich, diesen Zählimpuls nur bei der Umkehrung der Änderungstendenz in einer Richtung, beispielsweise beim Übergang vom steigenden zum fallenden Verlauf festzustellen. Demgegenüber bedeutet es eine Verdoppelung der Auflösung, wenn der Zählimpuls bei jeder Umkehrung der Änderung stendenz gewonnen wird. Es wird somit sowohl bei der Umkehr der Änderungstendenz von steigend auf fallend als auch bei der Umkehrung von fallend auf steigend ein Zählimpuls gewonnen. Entsprechend der Anzahl der Rotorwicklungen des Gleichstrommotors ergibt sich somit eine Auflösung, die umgekehrt proportional zu dieser Zahl ist.

Die Bestimmung derÄnderungstendenz ist auf vielfältige Weise möglich. Besonders einfach gestaltet sich diese bei der Weiterbildung der Erfindung, wie sie im Patentanspruch 3 angegeben ist. Mit Hilfe der Schwellwertschaltung können Störsignale, die dem Meßsignal überlagert sind, ohne zusätzliche Hilfsmittel und beispielsweise lediglich durch Vorgabe einer geeigneten Schwelle ausgefiltert werden. Es ist lediglich darauf zu achten, daß dieser Schwellwert größer als die maximal auftretende Intensität der i.d. Regel hochfrequenter Störsignale ist. Damit können diese Störsignale keinen Einfluß auf das Ergebnis des Meßverfahrens ausüben.

Die Bestimmung des Zeitpunkts, bei dem die Umkehrung der Veränderungstendenz des Meßsignals erfolgt, kann auf besonders einfache Weise mit Hilfe der Sample and Hold-Schaltung vorgenommen werden, wie sie im Patentanspruch 4 angegeben ist.

Eine vorteilhafte Ausbildung des grundsätzlichen Aufbaus einer für das Meßverfahren geeigneten Schaltvorrichtung kann mit Hilfe der Merkmale vorgenommen werden, wie sie im Patentanspruch 5 angegeben sind. Dabei werden die Feldeffekt-Transistoren zusätzlich dazu verwendet, das Meßsignal zu liefern.

Mit den Merkmalen, die im Patentanspruch 6 zu finden sind, werden Fehler beim Anfahren des Motors durch die in der Regel auftretende Stromspitze beim Einschalten vermieden. Durch die in der Regel lineare Veränderung des Tastverhältnisses des Pulsweitenmodulations-Signals kann der Gleichstrommotor hinsichtlich des erfindungsgemäßen Meßverfahrens störungsfrei auf die gewünschte Drehzahl hochgefahren werden.

Entsprechend kann beim Abschalten des Gleichstrommotors die Drehlage fehlerfrei mit Hilfe der Maßnahmen bestimmt werden, die im Patentanspruch 7 angegeben sind.

In der Zeichnung ist ein Ausführungsbeispiel der Erfindung dargestellt. Dabei zeigt
- Fig. 1: den grundsätzlichen Schaltungsaufbau für ein erfindungsgemäßes Meßverfahren zur Bestimmung der Drehlage eines Gleichstrommotors und
- Fig. 2: in einem Diagramm den Signalverlauf des Meßsignals sowie verschiedener elektronischer Bauteile aus Fia. 1.

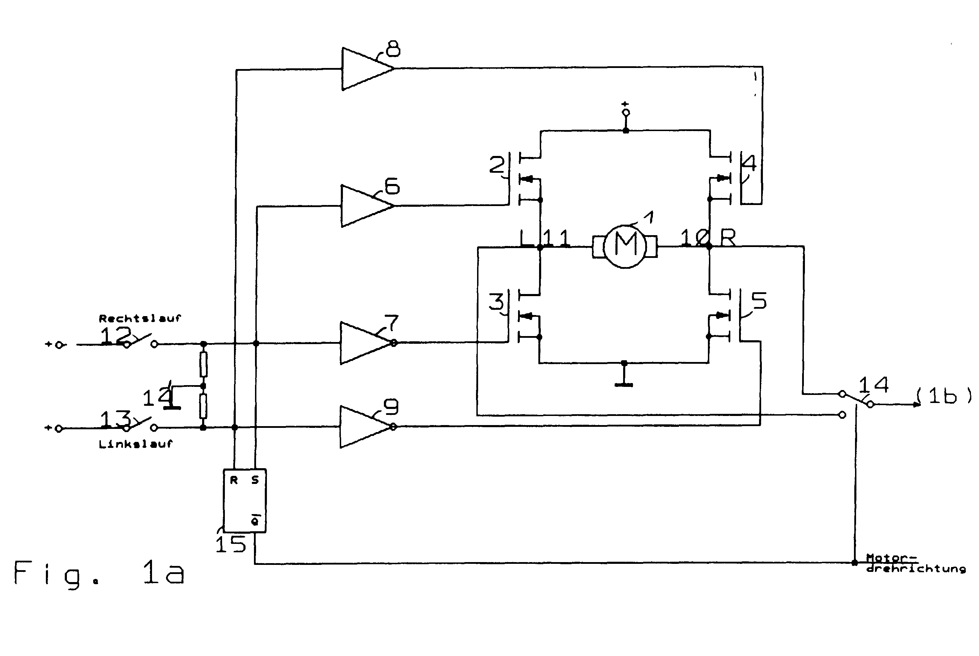

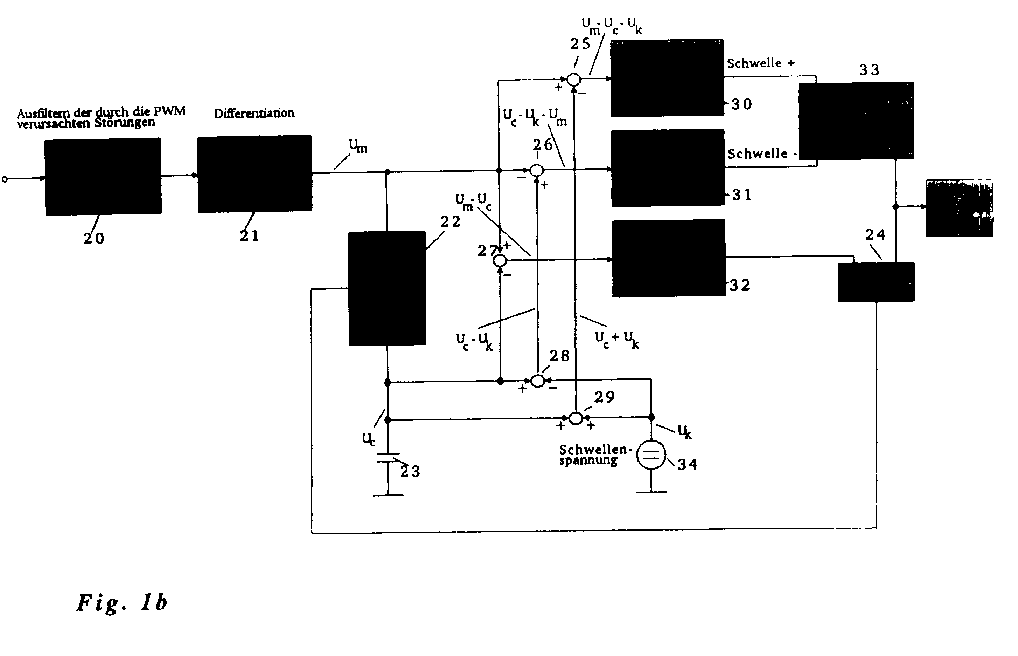

Die aus den Teilen 1a und 1b bestehende Figur 1 zeigt im Teil 1a den Aufbau einer Schaltanordnung zur Ansteuerung eines Gleichstrommotors 1 und im Teil 1b die wesentlichen Komponenten zur Verarbeitung des Meßsignals für die Bestimmung der Drehlage des Gleichstrommotors 1.

Die Schaltanordnung für die Ansteuerung des Gleichstrommotors 1 besteht im wesentlichen aus vier Feldeffekt-Transistoren 2 bis 5 sowie diesen zugeordneten Treibern 6 bis 9, die in der dargestellten Weise mit den Motoranschlüssen 10 und 11 des Gleichstrommotors 1 verschaltet sind. Dabei sind die Treiber 6 und 8 nichtinvertierend, während die Treiber 7 und 9 invertierend sind.

Der Rechtslauf (symbolisiert mit R) bzw. Linkslauf (L) des Gleichstrommotors 1 wird mit Hilfe von Schaltern 12 bzw. 13 manuell bzw. automatisch eingestellt. Dabei sind zunächst als Ausgangspunkt im ausgeschalteten Zustand die beiden Schalter 12 und 13 geöffnet. An den Treibern 6 bis 9 liegt damit über einen Anschluß 14' Massepotential. Die plusschaltenden Transistoren 2 und 4 sind ausgeschaltet, die masseschaltenden Transistoren 3 und 5 über die Treiber 7 und 9 eingeschaltet. Der Gleichstrommotor 1 ist damit kurzgeschlossen.

Zum Einschalten des Gleichstrommotors 1 für beispielsweise Linkslauf wird der zugehörige Schalter 13 eingeschaltet. Der Transistor 4 wird über den Treiber 8 leitend, während der Transistor 3 weiterhin leitend ist. Am Schaltpunkt 11 wird gleichzeitig das auszuwertende Meßsignal abnehmbar, das dem Spannungsabfall am Drain-Source-Widerstand des Feldeffekt-Transistors 3 entspricht und somit dem Motorstrom proportional ist.

Dieses Meßsignal gelangt über einen Wechselschalter 14 in die Signalverarbeitungsstufe, die in Teil 1b von Fig. 1 dargestellt ist. Dabei ist der Wechselschalter 14 durch ein RS-Flip-Flop 15 gesteuert, das seinerseits mit den Schaltern 12 und 13 in der dargestellten Weise verbunden ist und das an seinem invertierenden Ausgang Q sowohl den Wechselschalter 14 als auch eine nicht im einzelnen dargestellte Motordrehrichtungs-Erkennungsstufe ansteuert.

Zum Ausschalten des Gleichstrommotors 1 wird der Schalter 13 geöffnet. Damit wird der Transistor 5 zusätzlich zum Transistor 3 leitend. Der Motor 1 wird somit über die Motoranschlüsse 11 und 10 kurzgeschlossen. Am Motoranschluß 11 wird weiterhin das Meßsignal abgenommen.

Für den Rechtslauf gilt entsprechendes. Zum Einschalten wird der Schalter 12 geschlossen. Der Transistor 2 wird leitend, während der Transistor 5 weiterhin leitend ist. Am Motoranschluß 10 wird nunmehr das Meßsignal abnehmbar, das über den Wechselschalter 14 in der eingezeichneten Lage und wiederum das RS-Flip-Flop 15 gesteuert zur Signalverarbeitungsstufe (Fig. 1b) weitergeleitet wird. Auch hier wird zum Beenden der Bewegung des Gleichstrommotors 1 der Schalter 12 geöffnet und der Motor über die Transistoren 3 und 5 kurzgeschlossen. Das Meßsignal wird während des Auslaufens des Gleichstrommotors 1 weiterhin am Motoranschluß 10 abgenommen.

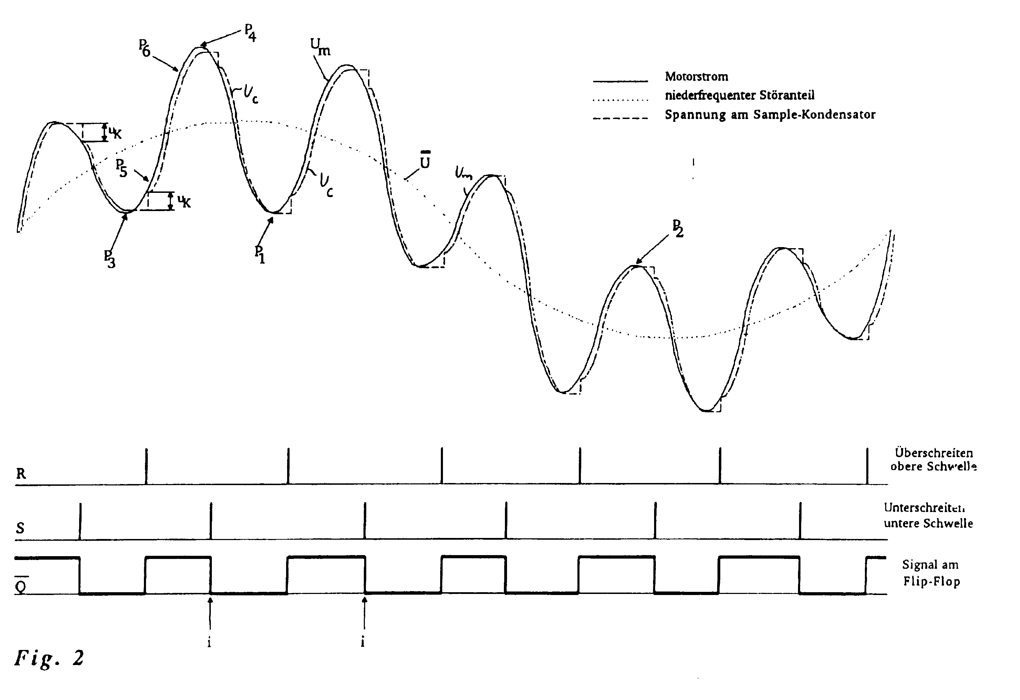

Das Meßsignal erfährt in der Signalverarbeitungsstufe (von Fig. 1b) zunächst eine Filterung mit Hilfe eines Tiefpasses 20 zur Beseitigung von höherfrequenten Störungen sowie eine Differentiation mit Hilfe eines Differenziergliedes 21 zur Beseitigung des Gleichstromanteils. Das Meßsignal besitzt dann den in Fig. 2 dargestellten Verlauf, wobei ein Betrieb des Gleichstrommotors mit konstanter Drehzahl angenommen ist. Der Lauf des Meßsignals Um ist in Fig. 2 mit einer ununterbrochenen Darstellung gezeigt.

Dieses - mit Hilfe der Elemente 20 und 21 aufbereitete - Meßsignal Um wird einer Sample and Hold-Schaltung, bestehend aus einem Schalter 22, einem Kondensator 23 sowie einem EXOR-Glied 24, unterworfen. Dabei sind zusätzlich Subtrahierer 25, 26, 27 und 28, ein Addierer 29 sowie Schwellwertschalter 30, 31 und 32 sowie ein RS-Flip-Flop 33 vorgesehen, dessen invertierender Ausgang das EXOR-Glied 24 steuert.

Mit Hilfe der Sample and Hold-Schaltung (22 bis 24) sowie des Subtrahierers 28 und des Addierers 29 wird die Veränderungstendenz des Meßsignals bestimmt und bei einer Umkehr der Änderungstendenz ein Zählimpuls (i) ausgelöst.

Das Meßsignal Um zeigt grundsätzlich den in Fig. 2 wiedergegebenen, gegenüber einem gepunktet eingezeichneten Mittelwert U einen in etwa sinusförmigen Verlauf. Der Mittelwert besitzt dabei eine Frequenz, die gleich einem 1/n-tel der Frequenz des Meßsignals Um ist, wobei n die Anzahl der Statorwicklungen ist. Es ist deutlich zu erkennen, daß die Verwendung üblicher Schwellwertgeber zur Bestimmung der Schwingungsfrequenz und damit der Drehzahl bzw. -lage des Gleichstrommotors 1 nicht zum gewünschten Ziel führt, da beispielsweise das Signalminimum der zweiten Sinusschwingung (Pfeil P1) höher als das Signalmaximum der fünften Schwingung (Pfeil P2) ist.

Zur Bestimmung der Veränderungstendenz wird das Meßsignal Um mit einem adaptiven Schwellwertgeber hinsichtlich seiner Veränderungstendenz überprüft.

Dieser besteht aus der genannten Sample and Hold-Schaltung (22-24), die durch einen aus den Schwellwertschaltern (30-32) gebildeten Fensterdiskriminator gesteuert ist. Die Schwellwertschalter stehen mit dem Subtrahierer 28 und dem Addierer 29 in Verbindung. Dabei liefert eine Konstant-Spannungsquelle 34 eine Spannung Uk, die z.B. 10% der Amplitude des Meßsignals Um und damit größer als die maximal auftretende Störung ist. Die Spannung Uk wird außerhalb der beiden Extremwerte des Meßsignals Um dem aktuellen Meßsignal Um hinzuaddiert (Addierer 29) bzw. von diesem abgezogen (Subtrahierer 28). Dabei wird ein Fenster der Breite 2 x Uk gebildet, das auf den jeweils aktuellen Meßwert Um bezogen ist. Außerhalb der beiden Extremwerte bedeutet dabei, daß das Meßsignal Um ständig ansteigt bzw. monoton fällt.

Es sei zunächst der monotone Anstieg des Meßsignals, beispielsweise der Signalverlauf zwischen dem ersten eingezeichneten relativen Minimum (Pfeil P3) und dem zweiten relativen Maximum (P4) betrachtet. Außerhalb des Umkehrbereichs, d.h. innerhalb des Verlaufs, der durch Pfeile P 5 und P 6 charakterisiert ist, ist das Flip-Flop 33, wie noch im einzelnen erläutert wird, gesetzt und der Schalter 22 geschlossen. Das aktuelle Meßsignal Um besitzt eine positive Veränderungstendenz, d.h. es ist stets - wenn auch geringfügig und nur durch das Zeitverhalten des Kondensators 23 bedingt - größer als das strichliert dargestellte Signal Uc, das durch den Kondensator 23 gebildet ist. Damit aber ist das Ausgangssignal der beiden Subtrahierer 25 und 26 bleibend negativ (betragsmäßig etwa gleich dem Wert Uk), das des Subtrahierers 27 hingegen gering positiv. Erreicht nun das Meßsignal Um den Maximalwert (Pfeil P4), so ändert sich das Ausgangssignal des Subtrahierers 27, da sich sein Eingangssignal bleibend nach gering negativ verschiebt. Der nachgeschaltete Schwellwertschalter 32 wirkt auf das EXOR-Glied 24. Dieses öffnet den Schalter 22. Damit wird der Maximalwert des Meßsignals in Form des Signals Uc "eingefroren".

Nach Überschreiten des Maximalwerts (Pfeil P4) bleibt das Eingangssignal des Schwellwertschalters 30 weiterhin negativ, während das des Schwellwertschalters 31 positiv wird, sobald das Meßsignal Um sich gegenüber dem eingefrorenen Maximalwert nunmehr als den Wert Uk unterscheidet. Der Schwellwertschalter 31 setzt damit das Flip-Flop 33 zurück. Das EXOR-Glied 24 öffnet damit wieder den Schalter 22.

Der sich anschließende Signalverlauf mit fallender Tendenz bis hin zum relativen Minimum (Pfeil P1) bewirkt keinerlei Schaltsignaländerungen, da die Schwellwertschalter 30 bis 32 ein gleichbleibendes Eingangssignal von etwa -Uk (30 und 31) bzw. 0 (32) erhalten. Nach Überfahren des Punktes P 1 kehrt sich das Eingangssignal des Schwellwertschalters 32 vorzeichenmäßig um. Damit wird das EXOR-Glied 24 erneut geschaltet und der Minimalwert des Meßsignals Um durch Öffnen des Schalters 22 eingefroren.

Im weiteren Signalverlauf ändert sich das Eingangssignal des Schwellwertschalters 30, sobald das Meßsignal gegenüber dem Minimalwert um den Wert Uk angestiegen ist. Damit setzt der Schwellwertschalter 30 das Flip-Flop 33. Das EXOR-Glied 24 schließt wiederum den Schalter 22. Das Referenzsignal Uc am Kondensator 23 wird damit wiederum dem Meßsignal Um nachgeführt.

Daraus ergibt sich das Prinzip der für die Zählimpulsgewinnung verwendeten Schaltsignalfolge. Das mit Hilfe des Schalters 22 abgetastete Meßsignal Um wird solange als Referenzsignal UC nachgeführt, wie das aktuelle Meßsignal Um größer als der abgetastete Wert Uc ist und gleichzeitig das Flip-Flop 33 gesetzt ist oder wenn das Meßsignal Um kleiner als der abgetastete Wert Uc ist und das Flip-Flop 33 nicht gesetzt ist. Das Flip-Flop 33 wird bei Überschreiten des Schwellwerts Uk zu Beginn des Signalverlaufs mit steigender Tendenz gesetzt und bei Unterschreiten des Schwellwerts Uk zu Beginn des Signalverlaufs mit fallender Tendenz zurückgesetzt. Das Ausgangssignal des Flip-Flops 33 liefert an einen Zähler Z die Zählimpulse (i) in Form einer (oder auch beider) Flanke(n) eines Rechtecksignals, aus denen sich die Drehlage des Gleichstrommotors 1 bestimmen läßt. Hierbei ist lediglich die Kenntnis der Rotorwicklungszahl erforderlich.

In der Schaltanordnung von Fig. 1 nicht dargestellt sind zwei zusätzliche Maßnahmen, die dazu dienen, die erfindungsgemäße Drehstellungserkennung auch zu Beginn und am Ende der Bewegung des Gleichstrommotors einzusetzen. Diese bestehen beim Anfahren des Gleichstrommotors darin, den Gleichstrommotor mit Hilfe einer Pulsweiten-Modulation hochzufahren, bei der das Tastverhältnis progredient geändert wird. Dadurch werden Fehler durch die Stromspitze beim Einschalten und die in der Regel vorliegende Begrenzung des Differenzierers 21 vermieden.

Um bei abgeschaltetem Motor ebenfalls die Bewegung des Gleichstrommotors 1 zu erfassen, wird der Gleichstrommotor über den jeweils zweiten masseschaltenden Feldeffekt-Transistor (5 bei Linkslauf bzw. 3 bei Rechtslauf) kurzgeschlossen. Dies wurde bereits zu Beginn des Ausführungsbeispiels beschrieben. Der Gleichstrommotor arbeitet dann als Generator und wirkt als Bremse. Bei der Auswertung des Signalverlaufs ist berücksichtigt, daß die Änderungen des Meßsignals jetzt um 180° gegenüber dem Motorbetrieb phasenverschoben sind. Da sich gleichzeitig die Stromrichtung beim Bremsen umkehrt, muß im Generatorbetrieb die gleiche Stromflanke wie im Motorbetrieb zur Gewinnung des Drehstellungs-Signals herangezogen werden.

Der Bremszeitpunkt wird dann so gewählt, daß das Minimum des Meßsignals, das durch die Stromflanke beim Bremsbeginn bedingt ist, bei einem Stromminimum zusammenfällt, das durch den Kommutator (nicht dargestellt) des Gleichstrommotors zusammenfällt. Auf diese Weise lassen sich die entstehenden Schaltsignale individuell erkennen. Konkret bedeutet dies, daß zu Beginn einerfallenden Flanke des Meßsignals der Bremsvorgang eingeleitet wird.

Auf diese Weise wird sowohl beim Motorbetrieb als auch beim Ein- und Ausschalten des Gleichstrommotors die dargestellte Schaltanordnung dazu verwendet, aus der Änderungstendenz des Meßsignals die Drehlage des Gleichstrommotors und damit beispielsweise die Drehzahl zu erkennen. Entsprechend dem jeweiligen Anwendungsfall lassen sich Gleichstrommotore, die in dererfindungsgemäßen Weise geschaltet sind, beispielsweise bei Kraftfahrzeugen im Rahmen einer Memory-Schaltung, d.h. in Positioniereinrichtungen zur gezielten Einstellung eines motorgesteuerten Teiles oder aber zur Steuerung des individuellen Scheibenwischerbetriebs oder der Bewegung eines Fensterhebers verwenden.

## Patentansprüche

1. Verfahren zum Erkennen von Extremwerten eines pulsierenden Meßsignals, bei dem die Änderungstendenz des Meßsignals untersucht wird, dadurch gekennzeichnet, daß zur Bestimmung der Drehlage einer Gleichstrommotors das Meßsignal an einem Motoranschluß des Gleichstrommotors abgenommen wird und daß bei Umkehrung der Änderungstendenz ein Zählimpuls ausgegeben wird.

2. Meßverfahren nach Anspruch 1, dadurch gekennzeichnet, daß ein Zählimpuls (i) für jede Umkehrung der Änderungstendenz ausgegeben wird.

3. Meßverfahren nach Anspruch 1 oder 2, dadurch gekennzeichnet, daß die Änderungstendenz mittels eines Schwellwertschalters (30-32) bestimmt wird, bei dem das Meßsignal (Um) mit einem Referenzwert (Uc) verglichen wird, der solange dem Meßsignal nachgeführt wird, bis sich die Änderungstendenz umkehrt und der anschließend unter Abgabe eines Zählimpulses (i) dem Meßsignal bei umgekehrter Änderungstendenz nachgeführt wird.

4. Meßverfahren nach Anspruch 3, gekennzeichnet durch eine "Sample-and-Hold"-Schaltung (22-24), die bei Umkehr der Meßsignal-Änderungstendenz den Zählimpuls auslöst.

5. Meßverfahren nach einem der Ansprüche 1 bis 4, dadurch gekennzeichnet, daß die Ansteuerung des Gleichstrommotors (1) mit Hilfe von Feldeffekt-Transistoren (2-5) erfolgt, deren Drain-Source-Widerstand mit den Motoranschlüssen (10,11) des Gleichstrommotors (1) in Reihe geschaltet ist.

6. Meßverfahren nach einem der Ansprüche 1 bis 5, gekennzeichnet durch eine Pulsweiten-Modulation mit zeitlich zunehmenden Impulsen als Anlaufsteuerung des Gleichstrommotors (1).

7. Meßverfahren nach einem der Ansprüche 1 bis 6, dadurch gekennzeichnet, daß die Abschaltung des Gleichstrommotors (1) unter Kurzschließen der Motoranschlüsse (10,11) bei fallender Tendenz des Meßsignals (Um) vorgenommen wird.

## Claims

1. A method of recognising extreme values of a pulsed measuring signal, wherein the direction of change of the measuring signal is investigated, characterised in that in order to determine the rotary position of a DC motor, the measuring signal is picked up at a connection to the DC motor and a metering pulse is generated when the direction of change reverses.

2. A method of measurement according to claim 1, characterised in that a metering pulse (i) is generated for each reversal of the direction of change.

3. A method of measurement according to claim 1 or 2, characterised in that the direction of change is determined by means of a threshold switch (30 - 32), in which the measuring signal (Um) is compared to a reference value (Uc) which is made to follow the measuring signal until the direction of change reverses and subsequently, after a metering pulse (i) has been generated, the reference value is made to follow the measuring signal when the direction of change reverses.

4. A method of measurement according to claim 3, characterised by a "sample and hold" circuit (22 - 24) which triggers the metering pulse when the direction of change of the measuring signal reverses.

5. A method of measurement according to any one of claims 1 to 4, characterised in that the direct current motor (1) is actuated by field-effect transistors (2 - 5) whose drain-source resistance is connected in series with the connections (10 - 11) of the direct current motor (1).

6. A method of measurement according to any one of claims 1 to 5, characterised by pulse-width modulation with pulses increasing in time for controlling the start-up of the direct current motor (1).

7. A method of measurement according to any one of claims 1 to 6, characterised in that the direct current motor (1) is switched off by short-circuiting the motor connections (10 - 11) when the measuring signal (Um) is tending to decrease.

## Revendications

1. Procédé pour détecter des valeurs extrêmes d'un signal de mesure impulsionnel, selon lequel on examine la tendance à la modification du signal de mesure,
caractérisé en ce que
pour déterminer la position angulaire d'un moteur à courant continu, on prend le signal de mesure sur une borne du moteur à courant continu et on émet une impulsion de comptage lors de l'inversion de la tendance à la modification.

2. Procédé de mesure selon la revendication 1,
caractérisé en ce qu'
une impulsion de comptage (i) est délivrée à chaque inversion de la tendance à se modifier.

3. Procédé de mesure selon la revendication 1 ou 2,
caractérisé en ce que
la tendance à se modifier est déterminée au moyen d'un interrupteur à valeur de seuil (30 à 32), dans le cas duquel le signal de mesure (Um) est comparé à une valeur de référence (Uc), qui continue à être amenée au signal de mesure jusqu'à ce que la tendance à se modifier s'inverse et qui continue ensuite d'être amenée au signal de mesure lors de l'inversion de la tendance à se modifier en délivrant une impulsion de comptage (i).

4. Procédé de mesure selon la revendication 3,
caractérisé par
un circuit "d'échantillon et de maintien" (22 à 24), qui déclenche l'impulsion de comptage lors de la tendance à se modifier du signal de mesure à se modifier.

5. Procédé de mesure selon l'une des revendications 1 à 4,
caractérisé en ce que
la commande du moteur à courant continu (1) a lieu à l'aide de transistors à effet de champ (2 à 5), dont la résistance drain-source est branchée en série avec les raccordements (10, 11) du moteur à courant continu (1).

6. Procédé de mesure selon l'une des revendications 1 à 5,
caractérisé par
une modulation d'impulsions en largeur avec des impulsions qui augmentent dans le temps en tant que commande de démarrage du moteur à courant continu (1).

7. Procédé de mesure selon l'une des revendications 1 à 6,
caractérisé en ce que
le débranchement du moteur à courant continu (1) est réalisé en mettant en court-circuit les raccordements du moteur (10, 11) lors de la tendance tombante du signal de mesure (Um).
